# DEMANDE DE BREVET EUROPEEN

(11) **EP 0 870 564 A1**
(43) Date de publication de la demande: **14.10.1998**
(21) Numéro de dépôt: 98440060.6
(22) Date de dépôt: 25.03.1998
(51) Int. Cl.: B23D 21/00

(54) **Procédé de sectionnement ou de décalottage d'une partie tubulaire fermée notamment d'une pièce hydroformée et moyens destinés à le mettre en oeuvre**

(30) Priorité: 25.03.1997 FR 9703799
(71) Demandeur: E.M.S., 67700 Saverne (FR)
(72) Inventeur: Heitz, Daniel, 67700 Saverne (FR)
(74) Mandataire: Metz, Paul

(57) **Abrégé**

Le procédé de sectionnement met en oeuvre un premier couteau réalisant une entaille initiale, un couteau principal (10) à lame épaisse (11) de forme composite réalise l'agrandissement de l'entaille initiale, puis le cisaillement des premiers copeaux épais (21) et (22) ainsi qu'un crevé (32) d'extrémité qui est agrandi en entaille d'extrémité (33) tout en poursuivant le sectionnement du tube et l'agrandissement de l'entaille d'extrémité (33) jusqu'à un niveau médian. Le travail final de coupe est réalisé par un dernier couteau à bord de coupe frontal droit ou incurvé convexe.

Cette invention intéresse les fabricants de machines à sectionner les tubes et à décalotter les pièces hydroformées.

## Description

La présente invention se rapporte à un procédé de sectionnement à froid d'une tube et plus généralement du sectionnement ou du décalottage d'une pièce hydroformée par l'utilisation successive de plusieurs couteaux dont un couteau à lame épaisse.

On connaît des coupe-tubes fonctionnant par l'action d'un premier couteau complétée par un deuxième couteau.

On connaît aussi l'utilisation de trois couteaux travaillant dans le même plan.

C'est le cas de la publication de la demande européenne n° 0 305 341 AMADIO.

Le premier couteau réalise un travail de préparation par une entaille initiale. Cette dernière est prolongée dans le cas de trois couteaux par une deuxième entaille réalisée par un deuxième couteau pour former une entaille initiale de plus grande longueur.

Le second ou le troisième couteau effectue le travail principal de coupe à travers toute la section du tube.

Les couteaux travaillent selon des directions croisées perpendiculaires au tube.

Ainsi, le premier couteau ou le cas échéant le premier et le deuxième couteau entaille(nt) le tube tangentiellement selon une direction générale transversale à la paroi à sectionner alors que le deuxième ou le cas échéant le troisième couteau provoque un véritable sectionnement en pénétrant dans le tube par l'entaille créée par le premier, ou le cas échéant le premier et le deuxième couteau(x) selon une direction perpendiculaire à celle utilisée par le premier couteau.

Pour ce faire, le second ou le dernier couteau est conformé en pointe triangulaire. La pointe pénètre d'abord dans l'entaille et l'agrandit puis les flancs symétriques de ce couteau assurent un travail de sectionnement à travers le tube.

L'avance des rampes obliques représentées par les chants tranchants de l'extrémité en triangle formant la pointe provoque la déchirure des bords et la formation de copeaux dirigés vers l'intérieur. Ces copeaux rabattus contre la paroi intérieure du tube par la progression du couteau forment une double épaisseur qui contrarie le travail ultérieur de la lame de ce deuxième couteau.

En effet, le travail de coupe s'effectue alors surtout par déchirement et non par cisaillement car les bords de la lame n'arrivent pas en contact direct de travail avec la paroi du tube mais opèrent un déchirement difficile à contrôler en forçant le copeau contre et à travers la paroi.

Ainsi, le travail de la lame est rendu peu efficace voire inadapté en raison de la présence d'un élément intermédiaire qui est le copeau à chacune des extrémités de l'entaille. La coupe n'est pas nette car il s'agit d'un déchirement avec éventuellement arrachement.

Ces copeaux rabattus contre la paroi intérieure sont difficiles à éliminer car les rampes de coupe en disposition évasée donnant naissance à des copeaux continuent à former des copeaux et il n'existe aucun moyen de les éliminer par exemple par sectionnement.

Une autre forme de couteau comme celle décrite dans la publication allemande OE n° 1752126 FINKEMEYER montre l'existence de couteaux à deux évasements symétriques successifs à chants tranchants séparés chacun par une saillie transversale tranchante destinée lors de la pénétration de la lame à sectionner les premiers copeaux s'enroulant sur eux-mêmes à l'intérieur du tube. Ces mêmes saillies sont destinées avec les chants tranchants du premier évasement à couper le reste du tube entre le crevé de fond et les portions adjacentes de la paroi.

On utilise dans toutes ces inventions des couteaux minces pour économiser la matière mais aussi la puissance utile de coupe qui peut provoquer la déformation d'un tube normal et pour diminuer l'effort à la pénétration. Il peut en être ainsi car le métal à sectionner présente une dureté habituelle. Il en résulte des copeaux métalliques minces d'une dureté courante.

Il en va tout autrement des pièces hydroformées dont le métal des parois a subi un véritable écrouissage le rendant particulièrement dur.

Le travail de coupe de ces parois dures réclame un couteau de grande résistance c'est-à-dire épais et en acier particulièrement dur. On a constaté que des épaisseurs d'au moins 4 mm sont nécessaires.

Les inconvénients rencontrés sont les suivants. La résistance à la pénétration nécessite des forces importantes. De ce fait et en raison de l'épaisseur de la lame, les copeaux sont épais et plaqués très fortement contre les chants tranchants des couteaux. Comprimés contre ces chants, ils y restent collés et sont enlevés par le couteau lors de son retrait. De plus, il s'agit de copeaux d'une dureté supérieure.

Les copeaux restant collés sur les chants tranchants du premier évasement engendrent le précédent inconvénient d'une coupe par déchirement et conduiraient à une zone de sectionnement avec aspérités, brisures et arrachements c'est-à-dire une découpe localement non présentable au plan industriel et commercial.

La présente invention a pour but de remédier à ces inconvénients en emportant les premiers copeaux avec le couteau principal et en faisant intervenir un couteau supplémentaire à front droit ou incurvé destiné à terminer le travail de sectionnement entre la position d'arrêt du deuxième couteau et l'entaille d'extrémité dans le fond de la paroi.

Le procédé selon l'invention produit un travail de coupe net et propre pour une pièce hydroformée, ne nécessitant aucune rectification ultérieure.

De plus, le procédé étant suffisamment performant, il permet d'être utilisé non seulement pour la coupe de tubes, mais surtout pour le décalottage de pièces hydroformées ou embouties et autres pièces à parois dures ainsi que pour la coupe de tubes à paroi double.

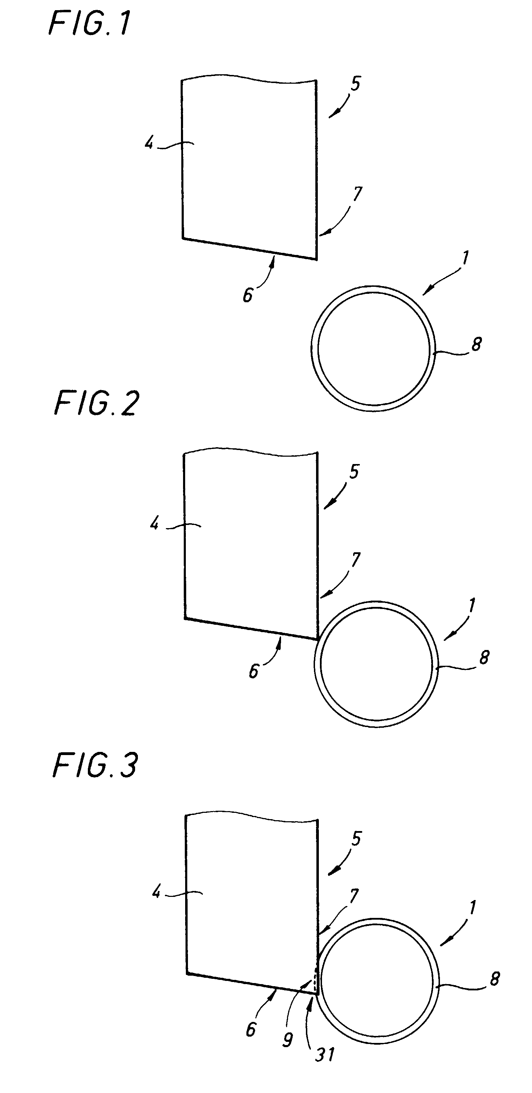

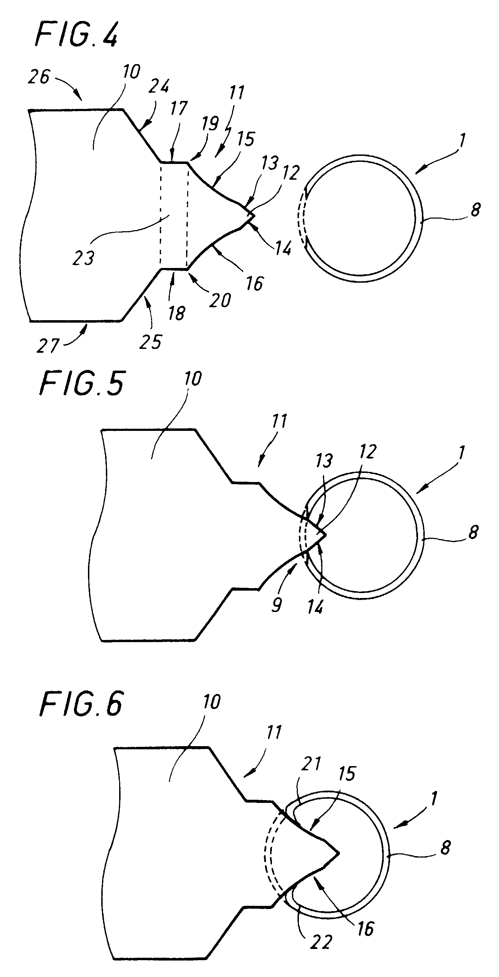

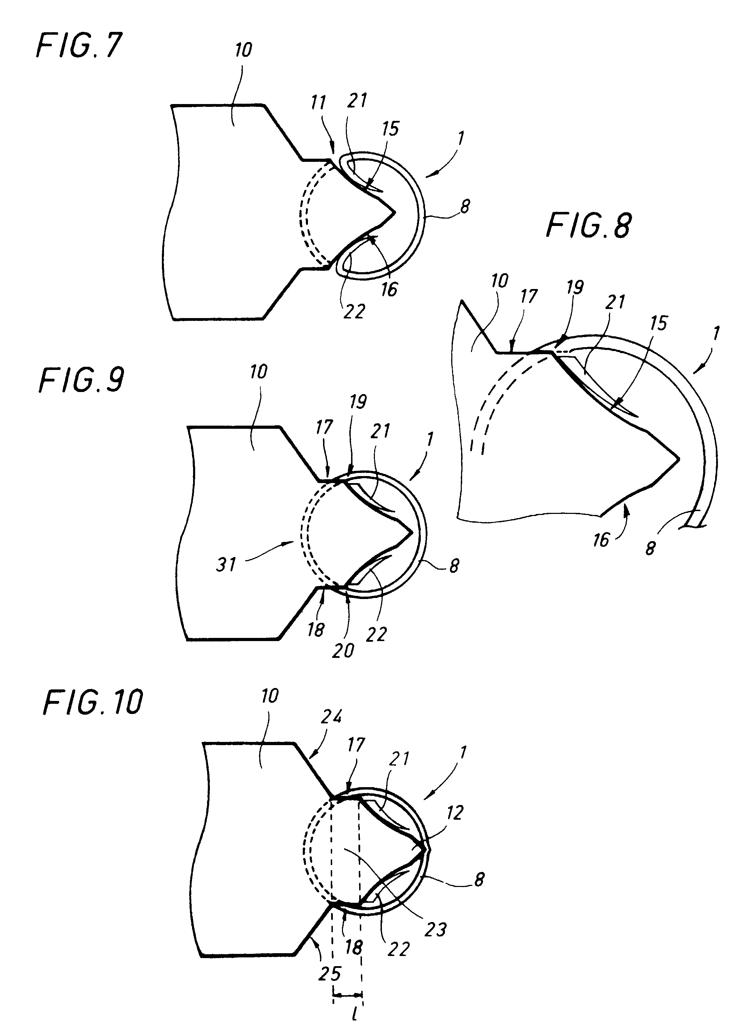

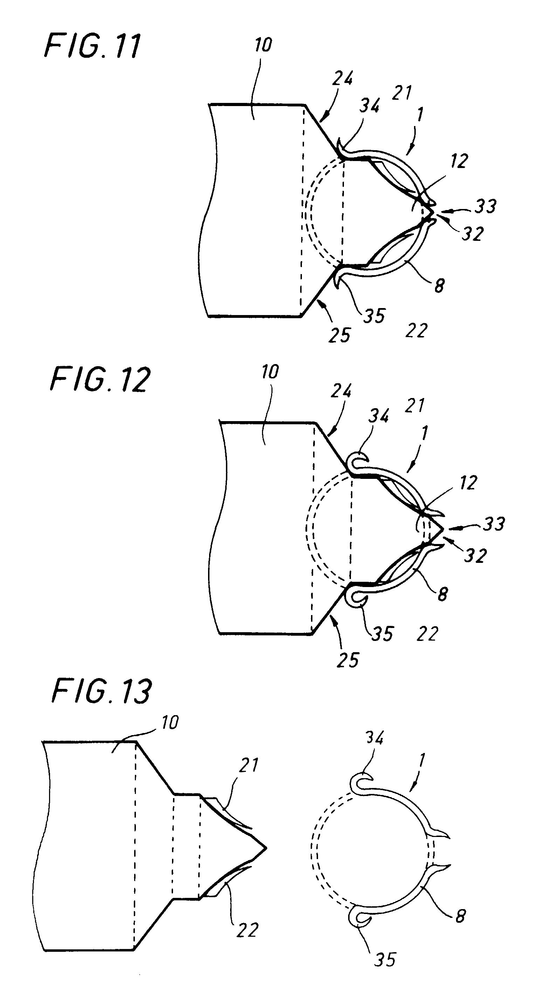

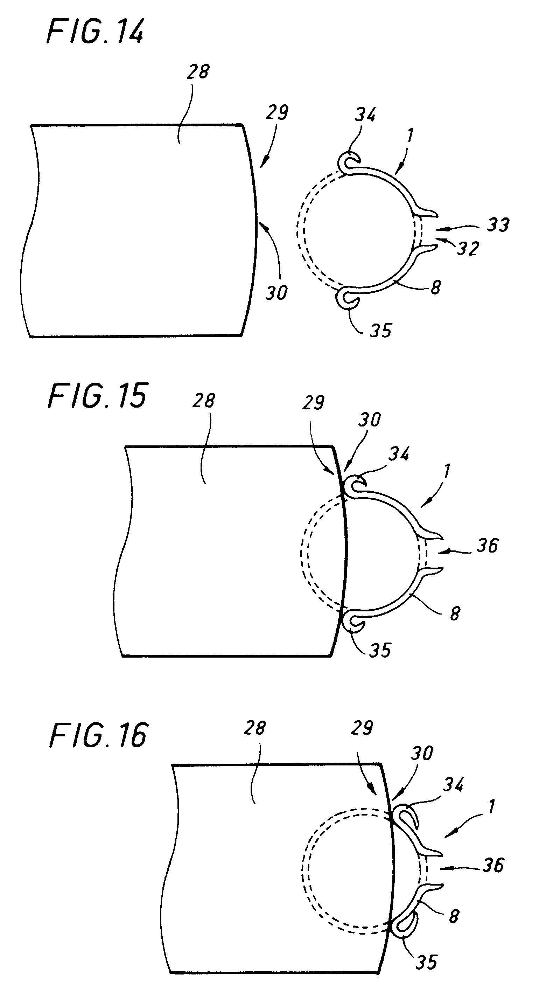

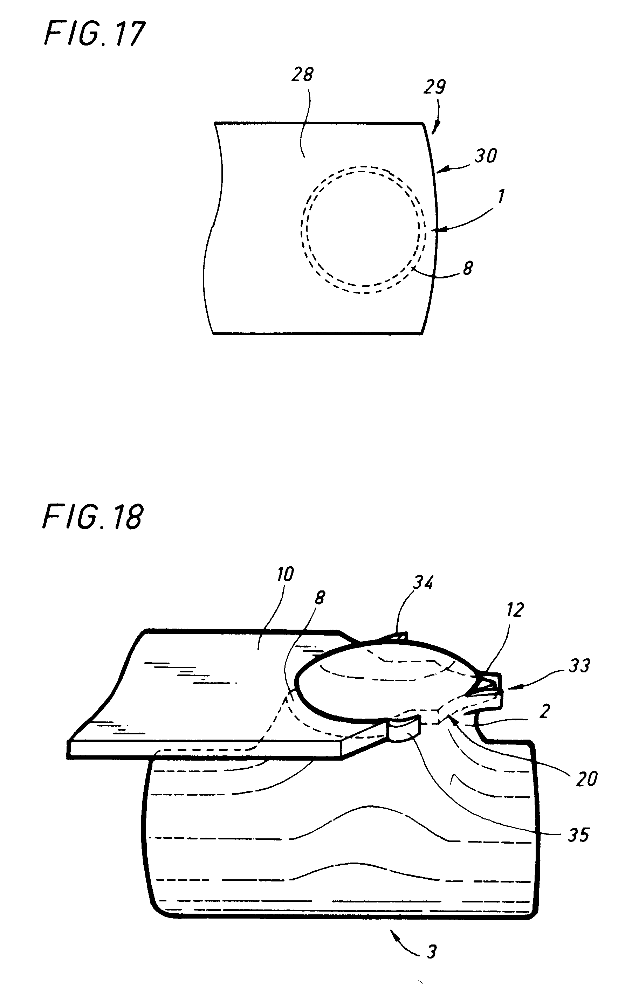

D'autres caractéristiques et avantages de l'invention apparaîtront dans la description qui suit, donnée à titre d'exemple et accompagnée des dessins dans lesquels :
. les figures 1 à 3 sont des vues schématiques illustratives du travail du premier couteau ;
. les figures 4 à 12 sont des vues schématiques illustrant les diverses phases de travail du deuxième couteau dont la figure 8 est une vue agrandie illustrant la brisure des premiers copeaux ;
. la figure 13 est une vue schématique montrant le retrait du deuxième couteau ;
. les figures 14 à 17 sont des vues schématiques illustrant quatre positions du troisième couteau ;
. la figure 18 est une vue en perspective montrant le décalottage d'une pièce hydroformée.

On décrira en même temps les moyens et le procédé selon l'invention destinés à sectionner des tubes ou à décalotter des pièces hydroformées par exemple avec moignon ou des pièces embouties ou autres pièces notamment à parois métalliques dures.

L'invention procède de l'idée générale inventive qui consiste à utiliser au moins trois couteaux dont un couteau principal à lame épaisse dont la pointe réalise une entaille de fond à travers la partie de la paroi en regard et qui consiste à emporter les premiers copeaux épais avec la lame épaisse du couteau principal puis à terminer le travail de coupe à l'aide d'un dernier couteau.

Le présent procédé coupe-tube à froid ou de décalottage à froid d'un moignon fermé d'une pièce hydroformée ou emboutie ou plus généralement d'une pièce à parois dures fait intervenir au moins deux couteaux différents effectuant chacun un travail de coupe.

On prendra comme exemple la variante préférée mettant en oeuvre trois couteaux.

Un tube 1 à sectionner ou un moignon 2 fermé à décalotter d'une pièce hydroformée 3 est préalablement immobilisé par des moyens appropriés sur la machine à sectionner. Les deux derniers couteaux sont montés sur une tourelle mobile.

Une lame 4 par exemple épaisse d'un premier couteau 5 par exemple à deux bords tranchants l'un droit ou oblique 6 et l'autre longitudinal 7 attaque tangentiellement la paroi 8 du tube 1 ou du moignon 2 dans un plan de coupe orienté selon une première direction perpendiculaire à la paroi. Cette lame effectue une coupe droite ou en oblique.

La course du premier couteau 5 et sa position par rapport au tube 1 sont choisies de telle façon que l'attaque et le travail de la lame 4 permettent de réaliser une entaille transversale initiale 9 traversante ou non c'est-à-dire d'épaisseur légèrement supérieure ou inférieure à celle de la paroi 8 du tube 1 ou du moignon 2.

Cette entaille initiale 9 constitue une ouverture par laquelle va pénétrer un deuxième couteau ou couteau principal 10 à lame épaisse 11 de forme composite et d'épaisseur suffisante pour être qualifiée d'épaisse. On a constaté des résultats satisfaisants pour des épaisseurs dépassant 4 mm.

Ce deuxième couteau ou couteau principal 10 affecte la forme de profil telle que représentée sur les figures.

Il comporte une extrémité avant en pointe triangulaire 12 délimitée par deux chants tranchants droits 13 et 14 convergeant vers l'avant selon un premier évasement et se poursuivant vers l'arrière par deux chants tranchants incurvés concaves 15 et 16 selon un deuxième évasement.

Les extrémités non communes des bords tranchants incurvés concaves 15 et 16 forment avec des bords longitudinaux intermédiaires parallèles 17 et 18 les suivant, des arêtes de coupe saillantes transversales 19 et 20 utilisées pour casser les premiers copeaux épais 21 et 22 comme on le verra ci-après. Les deux bords longitudinaux intermédiaires 17 et 18 sont droits et parallèles à l'axe longitudinal de la lame épaisse 11. Ils délimitent une plage intermédiaire 23 suivie par deux rampes rectilignes obliques 24 et 25 convergeant vers l'avant. Le corps de la lame épaisse 11 se poursuit ensuite par des bords longitudinaux rectilignes et parallèles 26 et 27 non tranchants.

La longueur "l" de la plage intermédiaire 23 délimitée par les bords longitudinaux intermédiaires 17 et 18 et sa distance par rapport à la pointe 12 dépend du diamètre du tube 1 ou du moignon 2 de façon que la pointe 12 attaque la paroi en regard lorsque les angles entre les bords 17 et 18 et les rampes obliques 24 et 25 (figures 9 et 10) atteignent les bords non encore découpés de la paroi.

La lame épaisse 11 du couteau principal 10 travaille dans le même plan de coupe perpendiculaire ou oblique par rapport à la pièce mais selon une direction de préférence perpendiculaire à la direction de travail du premier couteau.

On distingue un troisième couteau 28 à lame 29 qui termine le travail de sectionnement. Sa lame 29 affecte une forme générale rectangulaire à bord frontal tranchant 30 droit ou incurvé et convexe.

Le sectionnement de la pièce hydroformée ou à parois dures s'effectue selon les trois phases principales successives suivantes.

### 1. Travail du premier couteau pour une entaille initiale (figures 1 à 3) :

Le premier couteau 5, par un mouvement de sa lame 4 transversalement au tube 1 ou au moignon 2 réalise l'entaille initiale 9 dont la profondeur est inférieure ou dépasse légèrement l'épaisseur du tube et permet de réaliser une fente d'ouverture 31 dont la largeur est supérieure à l'épaisseur de la lame épaisse 11 du couteau principal 10 et dont la longueur est inférieure à la largeur de la plage intermédiaire 23 pour permettre de briser les premiers copeaux épais et le travail de coupe des bords incurvés 15 et 16 en pointe triangulaire 12 comme on le verra ci-après.

Après avoir pratiqué cette entaille initiale 9, le premier couteau 5 se retire. Il n'y pas ou peu de formation de copeaux.

### 2. Travail du couteau principal (figures 4 à 13) :

Le couteau principal 10 opère en quatre temps dans le même plan de coupe mais de préférence selon une direction d'avance perpendiculaire à celle du premier couteau 5 puis se retire en emportant les premiers copeaux épais.

### A. Agrandissement de l'entaille :

L'extrémité de la pointe 12 pénètre dans l'entaille initiale 9 et l'avance dans celle-ci des bords tranchants incurvés 15 et 16 délimitant la pointe 12 l'agrandissent en coupant la paroi du tube de chaque côté. Au cours de cette avance, il se forme des premiers copeaux épais 21 et 22 qui ne s'enroulent pas vers l'intérieur en raison de leur épaisseur et de leur dureté mais viennent se plaquer contre les chants tranchants du deuxième évasement par la forte pression imprimée par l'avance du couteau principal 10.

L'agrandissement de l'entaille initiale 9 se poursuit au fur et à mesure de la pénétration de la pointe 12 dans l'entaille 9 jusqu'aux extrémités de cette pointe au niveau des arêtes saillantes 19 et 20. Les copeaux épais s'agrandissent le long des chants tranchants du deuxième évasement.

La force de contact étant importante, les premiers copeaux épais restent en contact avec les chants et sont emportés avec le couteau principal lors de son retrait (figure 13).

### B. Sectionnement des premiers copeaux épais:

Arrivent les arêtes saillantes de coupe 19 et 20 représentant chacune un changement brutal de direction des bords tranchants 15 et 16 de la lame épaisse 11. Ces arêtes vives 19 et 20 constituent chacune un bord tranchant transversal qui réalise le cisaillement de chaque premier copeau épais 21 ou 22 correspondant lors de la progression de la lame épaisse 11 du couteau principal 10.

Ce cisaillement des premiers copeaux épais 21 et 22 provoque leur libération de la paroi, mais ils restent plaqués contre les chants tranchants du deuxième évasement (figures 8 et 9).

Ils ne constituent plus ainsi par leur présence une fausse contre-lame formant une pièce intermédiaire contrariant le travail de coupe en le transformant en travail de déchirement.

La longueur "l" de la plage intermédiaire 23 inférieure au diamètre du tube détermine la longueur d'une première zone de travail du couteau principal 10 le long de laquelle ce couteau va rencontrer et crever la paroi du tube en regard de l'entaille initiale 9.

La seconde zone de travail correspond à un nouveau travail de coupe par les rampes obliques 24 et 25 et la formation ou l'agrandissement d'un crevé 32.

La plage intermédiaire 23 à bords longitudinaux parallèles progresse ensuite dans la fente 31 agrandie et ceci par simple translation, c'est-à-dire sans travail de coupe au niveau de cette fente. Cette progression représente une course qui serait morte si l'on s'en remettait au seul coulissement de cette plage intermédiaire 23 dans la fente 31 de l'entaille initiale 9 agrandie.

Cette course morte au niveau de la plage intermédiaire 23 est d'une grande importance en raison des forces exceptionnelles nécessaires pour le sectionnement. Libéré de la force qu'il devait consacrer à la coupe par les chants du deuxième évasement, le moyen moteur de l'avance du couteau principal 10 appliquera toute sa force à la formation et à l'agrandissement du crevé 32.

### C. Crevé formant l'entaille d'extrémité (figure 10) :

Le rapport entre les dimensions des différentes parties de la lame épaisse 11 du couteau principal 10 et le diamètre du tube 1 est choisi de préférence de façon que l'extrémité de la pointe 12 arrive en contact avec la zone de la paroi interne du tube en regard de l'entaille initiale 9 agrandie après le cisaillement des premiers copeaux épais. Commence alors la deuxième zone de travail par la formation du crevé 32 de la partie arrière de la paroi du tube par l'extrémité en pointe 12 lors de la poursuite de l'avance du couteau principal 10.

Le crevé 32 débute par une perforation puis s'étend selon une fente 33.

Il s'avère cependant préférable de ne pas réaliser de coupe du tube ou de la pièce hydroformée pendant le travail de perforation conduisant à la formation du crevé 32.

La continuation du travail de coupe s'effectuera de préférence lors de l'agrandissement du crevé 32 par la poursuite de l'avance de la lame épaisse 11 du couteau principal 10, c'est-à-dire jusqu'à la fin de son travail de coupe correspondant à sa deuxième zone de travail.

### D. Poursuite du travail de découpe et d'agrandissement du crevé (figures 11 et 12) :

Après la course correspondant à la plage intermédiaire 23, et la formation du crevé 32, les naissances des rampes de coupe en oblique 24 et 25 arrivent en contact avec les bords transversaux de l'entaille agrandie débarrassée des premiers copeaux épais 21 et 22. Commence alors le travail de coupe de ces rampes. En raison de la forme d'attaque en coin et de la disposition convergente vers l'avant du couteau des deux rampes de coupe 24 et 25, des deuxièmes copeaux épais 34 et 35 se forment et s'enroulent à l'extérieur du tube ou de la pièce.

Le travail de coupe se poursuit jusqu'à une zone d'arrêt située approximativement au niveau d'un diamètre de section et de préférence avant une nouvelle attaque de la paroi par les arêtes 17 et 18.

Au cours de ce mouvement de coupe, la pointe 12 a progressé dans l'entaille d'extrémité et a agrandi le crevé 32 pour donner naissance à la fente d'extrémité 33 destinée à faciliter le travail du dernier couteau 28.

### E. Retrait du couteau principal (figure 13) :

Arrivé à ce stade, le couteau principal se retire avec les premiers copeaux épais plaqués sur les chants tranchants de son deuxième évasement.

### 3. Travail du dernier couteau :

La lame 29 de préférence épaisse du dernier couteau 28 termine le travail de coupe. Elle coupe la paroi sur chaque côté selon une portion d'arc de cercle inférieure à un quart de cercle.

Le travail de coupe est propre car le cisaillement s'effectue directement et à chaque fois sur un côté, l'extrémité de fin de coupe étant déjà ouverte par la fente d'extrémité 33.

Le procédé selon l'invention permet d'effectuer par un seul passage de chaque couteau une coupe nette sur toute la circonférence correspondant au corps sectionné du tube ou de la pièce.

Il en est de même pour le décalottage qui consiste à sectionner la pointe supérieure d'un moignon fermé (figure 17).

Comme indiqué, le procédé ci-dessus s'applique également à la coupe d'un tube ou d'une pièce à double paroi.

## Revendications

1. Procédé de sectionnement à froid d'un tube métallique à parois dures ou d'un moignon par exemple d'une pièce hydroformée ou emboutie à l'aide de plusieurs couteaux dont un couteau présentant une extrémité en pointe (12) permettant de réaliser après pénétration de la lame par une entaille initiale (9) et par la progression de pénétration de la lame par l'entaille initiale (9) un crevé dans la portion de paroi en regard de l'entaille initiale (9) de pénétration de cette lame, caractérisé en ce que l'on réalise l'entaille initiale (9) par un premier couteau (5) travaillant transversalement par rapport à la paroi à sectionner ou en biais par rapport à celle-ci, que l'on agrandit cette entaille initiale (9) par l'extrémité en pointe (12) d'un couteau principal (10) travaillant dans le même plan de coupe, mais selon une direction perpendiculaire à la direction de travail du premier couteau (5), que l'extrémité en pointe (12) est délimitée par deux bords droits (13) ou (14) suivis de deux bords incurvés concaves (15) ou (16) dont chacune des extrémités arrière se termine en arête transversale (19) ou (20) de raccordement avec un bord longitudinal délimitant chacun une plage intermédiaire (23), que l'entaille initiale (9) s'agrandit par le travail des bords incurvés concaves (15) et (16), que l'on brise chaque premier copeau épais (21) ou (22) généré par la progression d'enfoncement de la lame épaisse (11) et présent à chacune des extrémités de l'entaille initiale (9) par l'arête correspondante lors de l'avance de la lame épaisse (11) du deuxième couteau, que l'on crève par la pointe (12) la portion de paroi du tube en regard de l'entaille initiale (9) selon un crevé (32) agrandi en une entaille d'extrémité (33), que l'on continue le sectionnement du tube ou de la pièce par la progression de la lame épaisse (11) du couteau principal (10) au cours de laquelle les bords tranchants des rampes obliques rectilignes (24) et (25) continuent à couper la paroi latérale à sectionner et l'avance de la lame agrandit l'entaille d'extrémité (33) et en ce que l'on termine le sectionnement par le travail d'un troisième couteau (28) dans le même plan de coupe et selon la direction d'avance du couteau principal.

2. Procédé selon la revendication 1 caractérisé en ce que les premiers copeaux épais (21) et (22) brisés par l'action des arêtes transversales (19) et (20) lors de la progression de la pénétration de la lame épaisse (11) et plaqués contre les chants tranchants des bords incurvés concaves (15) et (16) sont emportés avec la lame épaisse (11) lors de son retrait.

3. Procédé selon la revendication 1 caractérisé en ce que la plage intermédiaire (23) bordée par deux bords longitudinaux rectilignes et parallèles à l'axe longitudinal de la lame épaisse (11) établit une zone morte de translation pour la lame épaisse (11) correspondant au travail de la pointe (12) pour la réalisation du crevé (32).

4. Procédé de sectionnement selon la revendication 1, caractérisé en ce qu'après la formation du crevé (32), le travail de coupe se poursuit jusqu'à une zone où débuterait une nouvelle attaque de la paroi par les arêtes (19) et (20) qui constitue la limite de pénétration de la lame épaisse avant son retrait.

5. Procédé de sectionnement selon la revendication 1, caractérisé en ce que la profondeur de l'entaille initiale (9) est légèrement supérieure à l'épaisseur du tube ou de la pièce.

6. Procédé de sectionnement selon la revendication 1, caractérisé en ce que le travail de la pointe (12) pour la réalisation du crevé commence à la fin de la translation de la zone intermédiaire (23).

7. Procédé de sectionnement selon la revendication 1, caractérisé en ce que la profondeur de l'entaille initiale (9) est légèrement inférieure à l'épaisseur du tube ou de la pièce.

8. Moyens destinés à mettre en oeuvre le procédé selon l'une quelconque des revendications précédentes caractérisé en ce qu'ils se composent d'un premier couteau (5) à lame rectangulaire à front (6) droit ou oblique et à bord inférieur (7) tranchant, un couteau principal (10) à lame (11) épaisse et à trois zones de travail dont une pointe (12) délimitée par deux bords tranchants droits (13) et (14) convergeant vers l'avant, suivis de deux bords incurvés concaves (15) et (16) et de deux bords longitudinaux parallèles (17) et (18) délimitant une plage intermédiaire (23), la lame épaisse (11) du couteau principal (10) se poursuivant par une zone finale de coupe à deux bords obliques tranchants (24) et (25) convergeant vers l'avant en continuation des bords longitudinaux rectilignes (17) et (18) parallèles à l'axe longitudinal de la lame, les moyens comprenant un troisième couteau (28) à bord tranchant frontal (30) droit ou incurvé convexe.

9. Moyens destinés à mettre en oeuvre le procédé selon la revendication précédente caractérisés en ce que les bords tranchants incurvés concaves (15) et (16) et les bords longitudinaux (17) et (18) parallèles à l'axe longitudinal de la lame sont raccordés chacun entre eux par une arête transversale (19) et (20).
